# EUROPEAN PATENT APPLICATION

(11) **EP 3 984 623 A1**
(43) Date of publication of application: **20.04.2022**
(21) Application number: 19883348.5
(22) Date of filing: 31.10.2019
(51) Int. Cl.: B01D 53/78

(54) **NITROGEN OXIDE ABSORBENT SLURRY, PREPARATION METHOD THEREFOR AND USE METHOD THEREOF**

(30) Priority: 13.06.2019 CN 201910563992; 09.09.2019 CN 201910889947
(71) Applicant: Huang, Liwei, Hangzhou, Zhejiang 310012 (CN)
(72) Inventor: Huang, Liwei, Hangzhou, Zhejiang 310012 (CN)
(74) Representative: Viering, Jentschura & Partner mbB Patent- und Rechtsanwälte
(86) International application number: PCT/CN2019/114737
(87) International publication number: WO 2020/098505

(57) **Abstract**

A nitrogen oxide absorption slurry and its preparation and use method for the removal of nitric oxide in gas streams, belonging to the technical field of air pollution control and related environmental protection, is characterized in that the absorption slurry contains at least one compound of anhydrous ferric chloride, ferric chloride monohydrate, ferric chloride dihydrate and the complex of ferric chloride and hydrogen chloride. The absorption slurry reacts with the nitric oxide in gas stream, so that the nitric oxide in the gas stream is absorbed by the slurry, thereby achieving the purpose of gas purification. And the absorbent can be recycled after regeneration.

## Description

### FIELD OF TECHNOLOGY

The present disclosure relates to a kind of nitrogen oxide absorption slurry and its preparation and use method thereof, which is used to remove nitric oxide from gas streams, and belongs to the technical field of air pollution control and related environmental protection.

### BACKGROUND OF THE INVENTION

Nitrogen oxides (NOₓ) produced by human activities mainly includes nitric oxide (NO) and nitrogen dioxide (NO₂). Among them, NO generally accounts for more than 95% of NOₓ produced by the combustion of fossil fuels, and the concentration is generally from tens of ppm to thousands of ppm. NOₓ - containing exhaust gases are also produced from other industrial processes, such as nitric acid production, building materials, metallurgy, chemical, pharmaceuticals, metal surface treatment and semiconductor production. NOₓ has a toxic effect on humans, and a large amount of its emissions is one of the main causes of atmospheric photochemical fogs and acid rains.

The applicant of the present invention has disclosed a method (CN105032163A) for removing NOₓ in a gas stream through a chemical adsorption reaction between ferric chloride and nitric oxide. When solid ferric chloride powders are directly used in the reactor, the utilization of the sorbent of ferric chloride is low, and it is easy to be carried away by the gas stream, which leads to the loss of the sorbent and subsequent secondary treatment. Therefore, the present invention proposes a method by using nitrogen oxide absorption slurry to replace solid sorbent to overcome the technical problems encountered.

### SUMMARY OF THE INVENTION

A nitrogen oxide absorption slurry (absorbent for short), which is used to remove nitric oxide in gas stream, is characterized in that the mass ratio of water and ferric chloride in the absorbent is from 0.005 to 0.55, and contains at least one of anhydrous ferric chloride, ferric chloride monohydrate, ferric chloride dihydrate, and a complex of ferric chloride and hydrochloric acid.

The less the water content and the more anhydrous ferric chloride crystals in the absorbent, the better the absorption effect on NO removal, and the optimal mass ratio of water to ferric chloride is from 0.01 to 0.11. However, as the water content decreases, the fluidity of the absorbent at the same temperature becomes poor and higher preparation and working temperatures are required to ensure the fluidity of the absorbent. When the mass ratio of water to ferric chloride is less than 0.005, the absorbent cannot be obtained within the temperature range of the invention. When the mass ratio is greater than 0.55, and the slurry does not contain at least one of anhydrous ferric chloride, ferric chloride monohydrate, ferric chloride dihydrate, and the complex of ferric chloride and hydrochloric acid, and the absorbent has no absorption effect on nitric oxide removal.

The preparation of the absorbent of the present invention is to mix anhydrous ferric chloride and water, or anhydrous ferric chloride and ferric chloride monohydrate, or anhydrous ferric chloride and ferric chloride dihydrate, or anhydrous ferric chloride and ferric chloride hexahydrate (or other ferric chloride containing crystalline water) in a mixing reactor according to the mass ratio as described above. After all the materials are fully mixed under a certain temperature and atmosphere, the finally obtained slurry is the absorbent.

The absorbent can be also prepared by dehydrating ferric chloride solution. The dehydration can be performed by heating or other chemical and physical methods.

The preparation temperature of the absorbent is 35°C and above. The higher the preparation temperature, the less water in the absorbent, which resulting in the higher content of effective ferric chloride. However, when the preparation temperature is too high, ferric chloride may undergo hydrolysis to release hydrogen chloride gas, which is negative to absorbent preparation. Therefore, when the absorbent is prepared at high temperature, it can be performed in a protective atmosphere of hydrogen chloride and in a closed environment to prevent decomposition of ferric chloride. The absorbent preparation temperature is usually lower than or equal to 200°C, preferably 65 to 130°C.

The preparation of the absorbent by using anhydrous ferric chloride and water can be performed as following steps: First weigh anhydrous ferric chloride powder and water respectively according to a predetermined ratio. Preferably, the mass ratio of ferric chloride to water is 9: 1 to 25: 1. Then, all the water is added into a closed mixing reactor (the same below), and then anhydrous ferric chloride powder is gradually added, mixed and heated to a predetermined temperature in the presence of inert gas such as air or nitrogen, or in the presence of a protective gas of hydrogen chloride (usually, a protective gas of hydrogen chloride may be used at a temperature above 60 °C, the same below) in the reactor. After ferric chloride and water are completely mixed, the preparation of the absorbent is completed.

The preparation of the absorbent by using anhydrous ferric chloride and ferric chloride hexahydrate can be performed as following steps: First weigh anhydrous ferric chloride powder and solid ferric chloride hexahydrate respectively according to a predetermined ratio. Preferably, the mass ratio of the anhydrous ferric chloride to the ferric chloride hexahydrate is about 3.5: 1 to 12: 1. Then, all the ferric chloride hexahydrate is added into a mixing reactor, and then anhydrous ferric chloride powder is gradually added, mixed and heated to a predetermined temperature in the presence of inert gas such as air or nitrogen, or in the presence of a protective gas of hydrogen chloride in the mixing reactor, and after all materials are completely mixed, the preparation of the absorbent is completed. When other ferric chloride hydrates, such as mono- or di-hydrate ferric chloride, are used as raw materials, the mass ratio these materials can be converted according to the above mentioned proportion.

In the preparation of the absorbent, hydrochloric acid solution can also be used in place of water to increase the content of anhydrous ferric chloride in the slurry, and the fluidity of the slurry may be also increased. This is because the chloride ions in the hydrochloric acid solution have coordination properties. In addition to the free form of the ferric chloride crystals existing in the slurry, they can also form complexes with the chloride ions in the hydrochloric acid solution, thereby increasing the content of ferric chloride in the slurry. When the absorbent works, the complex of ferric chloride and hydrogen chloride is decomposed as the hydrogen chloride volatilizes from the slurry, resulting in the increase of the content of ferric chloride crystals in the slurry. Therefore, the ability of the absorbent to continuously absorb nitric oxide is improved. The absorbent may also be prepared by dehydrating ferric chloride solution after acidification with hydrogen chloride gas or hydrochloric acid.

The content of hydrochloric acid in the absorbent has no special requirements, depending on actual needs. Commercial hydrochloric acid with the concentration of 30 to 38% is usually used in the preparation. The higher the concentration of the hydrochloric acid used, the better the fluidity of the prepared absorbent slurry at the same temperature, and the more ferric chloride in the slurry, the better the nitrogen removal. Compared with the use of water, the content of ferric chloride (containing complexes) in the absorbent can be increased at least 1 times by using hydrochloric acid solution under the same water content condition, and is proportional to the concentration of hydrochloric acid in the absorbent. The mass ratio of ferric chloride to water can also reach above 0.99 in the absorbent. Similarly, the higher the preparation temperature, the higher the ferric chloride content in the prepared absorbent. The working temperature of the absorbent (the reaction temperature between the absorbent and nitrogen oxide) may be also increased, which is beneficial for removing nitric oxide from gas stream at higher temperatures. Compared with temperature, the concentration of hydrochloric acid has a greater influence on the content of ferric chloride in the absorbent.

The preparation of the absorbent by using a hydrochloric acid solution instead of water is substantially the same. The preparation by using anhydrous ferric chloride and hydrochloric acid solution can be performed as following steps:

First weigh the ferric chloride powder and the hydrochloric acid solution according to a predetermined mass ratio. The mass ratio of the ferric chloride to the hydrochloric acid solution (take 30% hydrochloric acid as an example, the same below) is usually greater than or equal to 3. The dose of ferric chloride can be determined according to the concentration of hydrochloric acid and the content of water therein. With the increase of the concentration of hydrochloric used, the dose of ferric chloride increases, and the mass ratio of ferric chloride to hydrochloric acid solution is preferably from 10 to 100. In the preparation process, the hydrochloric acid solution can be firstly added to a closed mixing reactor, and then anhydrous ferric chloride powder is gradually added, mixed and heated to a predetermined temperature in the presence of inert gas such as air or nitrogen, or in the presence of a protective gas of hydrogen chloride in the mixing reactor, and after all materials are completely mixed, the preparation of the absorbent is completed.

The preparation by using ferric chloride hydrates (ferric chloride hexahydrate, for example) and hydrochloric acid solution can be performed as following steps: First weigh solid ferric chloride hexahydrate and hydrochloric acid solution according to a predetermined mass ratio, and then the hydrochloric acid solution is added to a closed mixing reactor, and then ferric chloride hexahydrate is dissolved in the hydrochloric acid solution, and heated and dehydrated in the presence of a protective gas of hydrogen chloride (hydrogen chloride gas or related mixed gas can be passed into the solution). After the composition in mixture in the reactor reaches the predetermined required mass ratio, the preparation of the absorbent is completed. Generally, the dehydration temperature is 65°C or higher, and the higher heating temperature, the faster dehydration process, preferably 110 to 200°C, but it is not limited.

In order to increase the content of ferric chloride crystal in the absorbent, salt solutions which have the properties of salt effect or chloride ion coordination may also be used in place of water in the preparation of the absorbent. Said salt solutions are mainly hydrochloride and sulfate salts of alkali metals, alkaline earth metals or transition metals, and corresponding acid salts, which include sodium chloride, potassium chloride, lithium chloride, calcium chloride, magnesium chloride, zinc chloride, manganese chloride, cobalt chloride, copper chloride, nickel chloride, aluminum chloride, and corresponding sulfates of the metals. In addition, most of the salt solutions are high boiling point salts, which may increase the working temperature of the absorbent by about 10°C. When the salt solution is used to prepare the absorbent, there is no special requirement for the concentration of the salt solution depending on actual need. The maximum concentration of salt solution is normally the saturation concentration at the working temperature. Other preparation processes are the same as those using hydrochloric acid as solution. The hydrochloric acid and the salt solution can also be used together, and the effect is better than single one.

The method for using the absorbent is to introduce the absorbent into an absorption reactor, and nitric oxide in gas stream is absorbed by chemical reaction with ferric chloride in the absorbent, thereby achieving the purpose of gas purification. The working temperature of the absorbent prepared by mixing water with ferric chloride is from 35°Cto 110°C, preferably from 65°C to 100°C. The working temperature of the absorbent prepared by using hydrochloric acid or a salt solution instead of water is from 35°C to 130°C, preferably from 70°C to 115°C. The working temperature is roughly equivalent to the temperature of the gas stream being processed. When the working temperature is high, hydrogen chloride gas may be discharged from the absorption slurry, which may be removed by downstream water or alkali solution absorption.

The major composition of the absorbent responsible for nitric oxide removal are anhydrous ferric chloride crystals, and ferric chloride monohydrate, ferric chloride dihydrate crystals, or related ferric chloride hydrochloric acid complex in the absorption slurry may pay a certain absorption effect, and the products of the absorption chemical reaction are coordination compounds or related salts of nitric oxide and ferric chloride. Possible reactions are listed below:

FeCl₃ + mNO + nH₂O → Fe(H₂O)n(NO)mCl₃ (1)

FeCl₃ + H₂O + mNO → Fe(NO)m (OH) Cl₂ + HCl (2)

Fe(H₂O)nCl₃ + mNO → Fe(H₂O)n(NO)mCl₃ (3)

Where, m + n ≤ 6 (usually ≤ 3, depending on the reaction conditions).

The mass ratio of the dosage of the absorbent to nitric oxide in the gas stream mainly depends on the content of ferric chloride crystal in the absorbent, and the theoretical reaction molar ratio is about 0.5 to 1 (iron to nitrogen ratio). In practical use, the dosage can be determined according to the water content in the absorbent, reaction temperature, removal requirements, and regeneration cycle. There are no special requirements of the mole ratio, and it is usually from 10 to 1000.

The absorption reactor adopted of the present invention can be gas-liquid contact reactors such as rotating, spraying, bubbling, and moving bed types that are commonly adopted in chemical engineering unit operations, and the flow pattern in the reactor can be used arranged in co-current flow, counter-flow, cross-flow and others. The detail design parameters can refer to the relevant chemical equipment design manual.

A rotating absorption reactor for nitrogen oxide absorption is consist of a horizontally placed rotating reactor column, a gas inlet at one end of the reactor column and a gas outlet at the other end, an absorbent inlet at the upper part of the reactor column and an absorbent outlet at the lower part, and the reactor is driven by a transmission system.

The treatment process is to add the absorbent to the reactor through the absorbent inlet, and to introduce the gas stream containing nitric oxide to the reactor from the gas inlet, and to drive the reactor rotating, so that the absorption slurry in the reactor flows along the inner wall of the column of the reactor and is in complete contact with the gas. Nitric oxide in the air stream is then absorbed by the absorbent, and the purified gas stream is discharged from the gas outlet at the other end of the reactor. The used absorbent can be periodically discharged from the absorbent outlet.

A counter-current absorption column for nitric oxide absorption includes a column body, a gas inlet at the lower part of the column, a gas outlet at the upper part of the column. The upper part of the column is provided with an absorbent inlet and a slurry sprayer, and the lower part is provided with an absorbent storage tank. The absorbent storage tank communicates with the absorbent slurry inlet of the column through a slurry pump and a connecting pipeline. The saturated absorbent after absorption can be sent to regeneration by a bypass pipeline.

The absorbent is still in a slurry state at the working temperature after the absorption reaction with nitric oxide, but it is in a solid state after cooling down to room temperature. When exposed to atmosphere and moisture, the product may be decomposed to release the absorbed nitric oxide gas. The absorbed nitric oxide gas can be removed from the absorbent by heating and/or humidifying. The heating temperature is usually above 65°C, preferably from 110°C to 180°C. The heating temperature under negative pressure or vacuum can be lower, and desorption is also faster. Both water vapor and hydrogen chloride gas may be generated during the heating process, and nitric oxide gas can be recovered from the desorption process or by-products such as nitric acid can be further prepared from nitric oxide gas. The absorbent after desorption can be regenerated after dehydration and chlorination (acidification with hydrogen chloride or hydrochloric acid, hereinafter the same), and the regeneration process is substantially the same as the preparation process of the absorbent described above.

The regeneration of the absorbent can also be implemented by deliquescing the absorbent in wet air or water vapor or dissolving it in solvents such as water or hydrochloric acid solution to release the absorbed nitric oxide gas, and then by dehydration and chlorination. The dehydration and chlorination can be performed by heating the product in the presence of hydrogen chloride gas, which is substantially the same as the preparation process. The heating temperature is usually above 65°C, preferably from 110°C to 200°C, but unlimited. The heating process can also adopt a stepwise heating method according to the change of iron salt concentration. The higher the concentration, the higher the heating temperature.

In addition, the dehydration and chlorination of absorbent can also be performed by using dehydrating agents such as sulfoxide chloride solution. When sulfoxide chloride is used as a dehydrating agent, hydrogen chloride gas is generated in the dehydration, which can also play a chlorinating effect on the absorbent regeneration. The reaction is:

SOCl₂ + H₂O → 2HCl + SO₂ (4)

Desorption and regeneration of the absorbent can be performed simultaneously. Similar to the preparation of the absorbent, the absorbent is heated and desorbed under the protection of hydrogen chloride gas. Or, with the addition of dehydrating agents such as sulfoxide chloride solution, the absorbent also can be regenerated by simultaneously removing the absorbed nitric oxide and water while the decomposition of iron salts is prevented.

Compared with prior art, this invention has the advantages that using absorption slurry to replace the solid ferric chloride powders to absorb and remove the nitric oxide in gas stream. Ferric chloride in the slurry with the ability to react with nitric oxide can exist in the form of extremely small crystals, which overcomes the low rate of gas-solid reaction and low utilization efficiency of the adsorbent. And the absorbent prepared by using hydrochloric acid solution or salt solutions to replace water, the content of ferric chloride in the slurry, the working temperature and the ability of the absorbent to continuously absorb nitric oxide are all increased. The absorbent can be recycled after regeneration.

### BRIEF DESCRIPTION OF THE DRAWINGS

Fig. 1 a schematic structural view of a rotating absorption reactor according to Example 2 of the present disclosure.
Fig. 2 a schematic structural view of a scrubbing absorption reactor according to Example 3, 5 and 8 of the present disclosure.

### DETAILED DESCRIPTION

The present invention is further described in detail below with reference to the drawings and embodiments.

**Example 1:** A preparation method of the absorbent: First weigh the anhydrous ferric chloride powder (industrial grade, net content ≥97%, the same below), water and ferric chloride hexahydrate (or other ferric chloride hydrates) respectively, according to predetermined mass ratios, and then the water or ferric chloride hexahydrate (or other ferric chloride hydrates) is added to the mixing reactor, and at the same time the temperature of the reactor is raised to a predetermined temperature in the presence of air or nitrogen or protective gas of hydrogen chloride (about 10-30% by volume, the same below), and then anhydrous ferric chloride powder is gradually added into the reactor, stirred and mixed. After all the materials are completely mixed, the preparation of the absorbent is completed. The mass ratio of materials, preparation temperature and other operating parameters are shown in table 1.

**Table 1 Operating parameters for the absorbent preparation**

| No. | Mass ratio | Temperature (°C) | Protection gas |
|---|---|---|---|
| 1 | FeCl₃:H₂O=25:1 | 100~110 | HCl |
| 2 | FeCl₃:H₂O=9:1 | 35~45 | Air |
| 3 | FeCl₃:FeCl₃·6H₂O=12:1 | 90~100 | N₂ |
| 4 | FeCl₃:FeCl₃·6H₂O=8:1 | 70~80 | N₂ |
| 5 | FeCl₃:FeCl₃·6H₂O=3.5:1 | 45~55 | N₂ |
| 6 | FeCl₃:FeCl₃·H₂O=1.5:1 | 85~95 | HCl |
| 7 | FeCl₃:FeCl₃·2H₂O= 1:1 | 60~70 | N₂ |

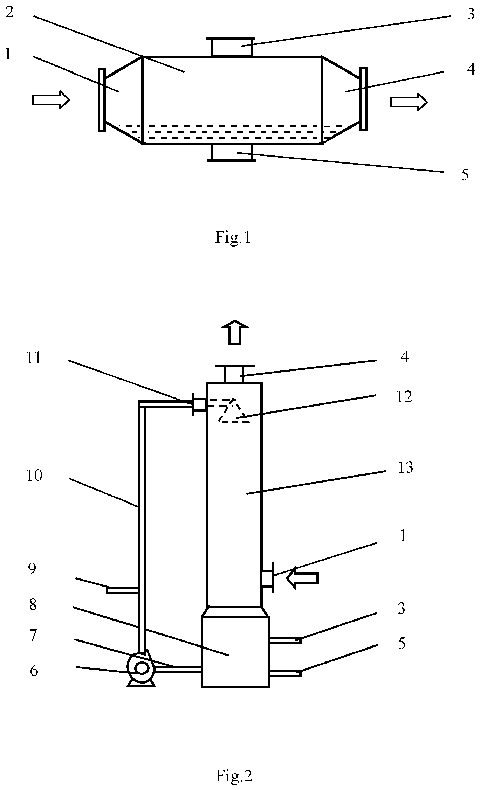

**Example 2:** A rotating absorption reactor is adopted as shown in Fig. 1. The reactor is consisted of a horizontally placed rotating reactor column (2), a gas inlet (1) at one end of the reactor column and a gas outlet (4) at the other end, an absorbent inlet (3) at the upper part of the reactor column and a absorbent outlet (5) at the lower part, and the reactor is driven by a transmission system.

The Hastelloy made reactor column is with 300mm in diameter, and 1500mm in length, and two ends of the reactor are conical shaped with a gas inlet and an outlet the inlet of both 150 mm in diameter. The rotation speed of the column is about 45 to 60 rpm. The gas flow rate of to-be treated gas is about 120m³/h (The residence time of the gas in the reactor is about 3s), and the temperature of the gas stream in the reactor is adjusted from about 35 to 110 °C. The gas stream before the inlet is composed of nitric oxide 500 ppm, sulfur dioxide about 300 ppm, carbon dioxide about 10%, oxygen about 8% (by volume, the same below), moisture about 10%, and the balance nitrogen gas. The amount of absorbent added into the reactor is about 30 kg.

After the absorbent is added to the reactor through the absorbent inlet (3) and the absorbent inlet (3) is closed, the gas stream containing nitric oxide is introduced to the reactor from the gas inlet (1), and the reactor column (2) is driven to rotate by a transmission system, so that the absorption slurry in the reactor flows along the inner wall of the column of the reactor and is in full contact with the gas.

Nitric oxide in the air stream therefore is absorbed by chemical reaction with the ferric chloride in absorbent, and the purified gas stream is discharged from the gas outlet (4) at the other end of the reactor, and the saturated absorbent can be periodically discharged through the absorbent outlet (5). The average removal of nitric oxide for one hour is shown in Table 2.

**Table 2 Effect of absorbent on nitric oxide removal**

| No. in Table 1 | Gas temperature (°C) | Average NO removal |
|---|---|---|
| 1 | 105-110 | 45 |
| 1 | 95~100 | 60 |
| 1 | 85~90 | 70 |
| 2 | 40~45 | 20 |
| 3 | 100~105 | 55 |
| 3 | 90~95 | 65 |
| 3 | 80~85 | 70 |
| 4 | 65~70 | 65 |
| 5 | 35~40 | 20 |
| 6 | 70~75 | 50 |
| 7 | 50~55 | 15 |

**Example 3:** A scrubbing absorption reactor is adopted as shown in Fig. 2. The reactor is consisted of a column body (13), a gas inlet (1) at the lower part of the column, a gas outlet (4) at the upper part of the column. The upper part of the column is provided with an absorbent inlet (11) and a slurry sprayer (12), and the lower part is provided with an absorbent storage tank (8). The absorbent storage tank communicates with a slurry pump (6) though a connecting pipeline (7), and the slurry pump communicates with the absorbent inlet (11) through an absorbent supplying pipeline (10). The saturated absorbent can be sent to regeneration by a bypass pipeline (9).

The scrubbing column is an empty tower, using Hastelloy as the material. The dimension of the absorption column is 300 mm in diameter and 3500mm in height with an effective spray height of about 2000mm. The entire pipeline system is heat insulated.

The treatment process is to supply the absorbent to absorbent inlet of the scrubbing column through a slurry pump, and then the absorbent slurry is sprayed from the top to bottom in the column by a slurry sprayer, and the gas stream containing nitric oxide is introduced into the column from the gas inlet. The gas stream is in full contact with the absorbent droplets in the column, and the nitric oxide in the gas stream is absorbed. After reaction, the purified gas stream is discharged from the gas outlet of the absorption tower, and the absorbent circulates by the slurry pump. The saturated absorbent can be sent to a regeneration unit by a bypass pipeline.

The flow rate of gas stream is about 150m³/h (the residence time of the gas in the reactor is about 2s), and the gas composition is the same as in example 2. The temperature of the gas stream in the column is about 80~90°C, and the temperature of absorbent is roughly the same. The absorbent with the serial number of 3 in table 1 is used in the test. The total amount of the absorbent added to the reactor is about 50 kg, and the circulation amount by the absorbent pump is about 350kg/h. The maximum average removal of nitrogen oxides for one hour is about 75%.

**Example 4:** A preparation method of the absorbent by mixing anhydrous ferric chloride with a hydrochloric acid solution of different concentrations: The preparation process is to add a hydrochloric acid solution to a mixing reactor, and then gradually add the ferric chloride powder, stirred and mixed. The reactor temperature is from room temperature to 120°C, and when the reactor temperature is higher than 60°C, the protective gas of hydrogen chloride (10-30% hydrogen chloride in nitrogen gas) is introduced into the reactor. After all the materials are completely mixed, the preparation of the absorbent is completed. The mass ratio of materials, preparation temperature and other operating parameters are shown in table 3.

**Table 3 Mass ratio and operating parameters for the absorbent preparation**

| No. | HCl Con. (%) | Mass ratio of FeCl₃:HCl | Temperature (°C) | Protection gas |
|---|---|---|---|---|
| 8 | 0 | 15 | 70~75 | N₂ |
| 9 | 5 | 20 | 75~80 | HCl |
| 10 | 10 | 35 | 80~85 | HCl |
| 11 | 20 | 45 | 90~95 | HCl |
| 12 | 30 | 70 | 100~105 | HCl |
| 13 | 34 | 80 | 85~90 | HCl |
| 14 | 36 | 50 | 35~40 | HCl |
| 15 | 36 | 100 | 115~120 | HCl |

**Example 5:** The reactor shown in figure 2 was adopted. The temperature of the gas stream in the absorption reactor ranges from about 65 to 120°C, and other conditions are the same as in example 3. The maximum average removal of nitrogen oxide for one hour is shown in Table 4.

**Table 4 Effect of absorbent on nitric oxide removal**

| No. in table 3 | Gas temperature (°C) | Average NO removal (%) |
|---|---|---|
| 8 | 70~75 | 50 |
| 8 | 80~85 | 35 |
| 9 | 75~80 | 60 |
| 10 | 100~105 | 65 |
| 11 | 90~95 | 70 |
| 11 | 115~120 | 40 |
| 11 | 120~125 | 25 |
| 12 | 90~95 | 75 |
| 13 | 95~100 | 80 |
| 14 | 80~85 | 75 |
| 14 | 100~105 | 65 |
| 15 | 125~130 | 20 |

**Example 6:** A preparation method of the absorbent: 30 parts of solid ferric chloride hexahydrate and 1 part of 36-38% hydrochloric acid solution are weighed according to the mass ratio. The prepared hydrochloric acid solution is first added to a mixing reactor, and then ferric chloride hexahydrate is added gradually to the reactor, stirred and mixed (the temperature of the reactor may be raised to about 50~60°C). After all the added solid ferric chloride hexahydrate is dissolved, the temperature of the reactor is increased to about 150~180°C for dehydration in the presence of a mixed gas of nitrogen and hydrogen chloride (Hydrogen chloride about 30-50%). When the water content in the liquid phase decreased to about 4-5% of the material, the preparation of the absorbent is completed.

**Example 7:** A preparation method of the absorbent: The absorbent is prepared by mixing anhydrous ferric chloride with different salt solutions. The preparation is to add a predetermined amount of water and solid salt to a mixing reactor. After the salt is completely dissolved, ferric chloride powder of a predetermined quality is then gradually added, and the other process is the same as that in above examples. After the ferric chloride and the salt solution are completely mixed, the preparation of the absorbent is completed. The mass ratio of materials and operating parameters are shown in Table 5.

**Table 5 Mass ratio of materials and operating parameters**

| No. | Salt solution | Mass ratio of FeCl₃ to salt solution | Temperature(°C) | Protection gas |
|---|---|---|---|---|
| 16 | 5%NaCl | 30 | 65~70 | N₂ |
| 17 | 25 %NaCl | 40 | 80~85 | HCl |
| 18 | 30%KCl | 45 | 90~95 | HCl |
| 19 | 40%CaCl₂ | 40 | 120~130 | HCl |
| 20 | 15%MgCl₂ | 35 | 95~100 | HCl |
| 21 | 30%MgCl₂ | 40 | 110-115 | HCl |
| 22 | 35%MnCl₂ | 40 | 115~120 | HCl |
| 23 | 15%Na₂SO₄ | 35 | 60~65 | N₂ |
| 24 | 35%ZnSO₄ | 40 | 100~105 | HCl |
| 25 | 35%CuSO₄ | 40 | 95~100 | HCl |
| 26 | 15%NaCl+10%HCl | 40 | 95~100 | HCl |
| 27 | 15%Na₂SO₄+10%HCl | 40 | 95~100 | HCl |
| 28 | 30%AlCl₃+20%HCl | 50 | 90~95 | HCl |
| 29 | 60%ZnCl₂+20%HCl | 45 | 95~100 | HCl |

**Example 8:** The reactor shown in Fig. 2 was adopted. The temperature of the gas stream in the absorption reactor ranges from about 65 to 130°C, and other conditions are the same as in example 3. The average removal of nitrogen oxide for one hour is shown in Table 6.

**Table 6 Effect of absorbent on nitric oxide removal**

| No. in table 5 | Gas temperature (°C) | Average NO removal (%) |
|---|---|---|
| 16 | 70~75 | 55 |
| 17 | 80~85 | 75 |
| 18 | 75~80 | 85 |
| 19 | 100~105 | 65 |
| 20 | 90~95 | 70 |
| 21 | 115~120 | 45 |
| 22 | 120~125 | 40 |
| 23 | 65~70 | 60 |
| 24 | 100~105 | 65 |
| 25 | 125~130 | 25 |
| 26 | 85~90 | 80 |
| 27 | 70~75 | 65 |
| 28 | 90~95 | 70 |
| 29 | 100~105 | 75 |

**Example 9** A method for regenerating the absorbent: The reacted absorbent of serial No. 4 used in example 2 is introduced to a regeneration reactor (the same as the mixing reactor for absorbent preparation, the same below), and then 20% hydrochloric acid solution with an amount of about 0.1 to 0.3 of the volume of the absorbent is added to the reactor after evacuating the air in the reactor, stirred and mixed, and then the reactor is heated to the temperature of about 90 to 110 °C for a period of maintaining. The nitric oxide gas released from absorbent is recovered during above process. After the release of nitric oxide is completed, a mixed gas of nitrogen and hydrogen chloride is introduced below the liquid surface in the reactor, and the same time, the temperature of the reactor is raised to about 120~150°C for dehydration. When the water content in liquid phase decreases to about 5-7%, the regeneration of the absorbent is completed.

**Example 10** A method for regenerating the absorbent: The reacted absorbent of serial No. 10 used in example 5 is added to a regeneration reactor. After the air in the reactor is evacuated, the reactor is heated to the temperature of about 150 to 160°C for a period of maintaining, and at the same time, nitric oxide gas released from absorbent is recovered. After the release of nitric oxide is completed, a mixed gas of nitrogen and hydrogen chloride is introduced below the liquid surface in the reactor for chlorination and dehydration. When the water content in the liquid phase decreases to 3-5%, the temperature of the reactor is adjusted to 100~110°C, and lasts for a period of time, before completing the regeneration of the absorbent.

**Example 11** A method for regenerating the absorbent: The reacted absorbent of serial No. 17 used in example 8 is introduced to a regeneration reactor, and then 20% hydrochloric acid solution with an amount of about 0.1 to 0.3 of the volume of the absorbent is added to the reactor after the air in the reactor is evacuated, stirred and mixed, and then the reactor is heated to the temperature of about 100-110°C for a period of maintaining. The nitric oxide gas released from absorbent is recovered during above process. After the release of nitric oxide is completed, a mixed gas of nitrogen and hydrogen chloride is introduced below the liquid surface in the reactor, and at the same time, the temperature of the reactor is raised to about 160~180°C for dehydration. When the water content in liquid phase decreases to about 3~5%, the regeneration of the absorbent is completed.

**Example 12** A method for regenerating the absorbent: The absorbent after the reaction with the serial number 11 used in example 5 was added to the regeneration reactor. After the air was evacuated, the temperature of the reactor was maintained at the temperature of 95~100°C, and then sulfoxide chloride liquid was slowly added by dropping to the reactor for dehydration and chlorination, stirring to make the absorbent slurry in the reactor fully contacted with the sulfoxide chloride liquid. The vaporized sulfoxide chloride in the reactor is returned to the reactor by a condensation reflux, and the water vapor, nitric oxide, hydrogen chloride and sulfur dioxide generated during the reaction process are discharged through the non-condensable gas outlet of the condensation reflux for further treatment. The total dosage of sulfoxide chloride added to the reactor is about 6~10 times the water removed from absorbent. When the water content in liquid phase decreases to about 2~3%, the regeneration of the absorbent is complete.

## Claims

1. A nitrogen oxide absorption slurry for removing nitric oxide gas from gas streams, wherein said absorption slurry contains at least one of anhydrous ferric chloride, ferric chloride monohydrate, ferric chloride dihydrate, and a complex of ferric chloride and hydrochloric acid, and the mass ratio of water to ferric chloride in the absorption slurry is from 0.005 to 0.55.

2. The absorption slurry according to claim 1, wherein the absorption slurry is prepared by mixing anhydrous ferric chloride and water, or anhydrous ferric chloride and hydrochloric acid, or anhydrous ferric chloride and ferric chloride monohydrate, or anhydrous ferric chloride and ferric chloride dihydrate, or anhydrous ferric chloride and ferric chloride hexahydrate, or anhydrous ferric chloride and ferric chloride monohydrate and hydrochloric acid, or anhydrous ferric chloride and ferric chloride dihydrate and hydrochloric acid, or anhydrous ferric chloride and ferric chloride hexahydrate and hydrochloric acid, respectively, according to said mass ratio under a certain temperature and atmosphere.

3. The preparation method of the absorption slurry according to claim 2, wherein said temperature for preparing the absorbent slurry is 35°C and above, and said atmosphere is in the presence of an inert gas or a hydrogen chloride protective gas.

4. The absorption slurry according to claim 1, wherein the absorption slurry is prepared by the dehydration of the ferric chloride solution, or by the dehydration of the mixture of ferric chloride and hydrochloric acid, under a certain temperature and atmosphere.

5. The preparation method of the absorption slurry according to claim 4, wherein said temperature for preparing the absorbent slurry is 65°C and above, and said atmosphere is in the presence of an inert gas or a hydrogen chloride protective gas.

6. The preparation method of the absorption slurry according to claim 2, wherein said water can be replaced with a salt solution or a mixture of salt and hydrochloric acid, and said salt can be a chloride or sulfate of alkali metal, alkaline earth metal or transition metal, which includes sodium chloride, potassium chloride, lithium chloride, calcium chloride, magnesium chloride, zinc chloride, manganese chloride, cobalt chloride, copper chloride, nickel chloride, aluminum chloride, and the corresponding sulfates.

7. The absorption slurry according to claim 1, wherein the use method of the absorption slurry is introduced into a nitrogen oxide absorption reactor and nitric oxide in gas stream is absorbed by chemical reaction with ferric chloride in the absorbent at a certain temperature.

8. The use method of the absorption slurry according to claim 7, wherein the nitrogen oxide absorption reactor can be a rotating, spraying, bubbling or moving bed type gas-liquid contact reactors, and the flow pattern in the reactor can be used arranged in co-current flow, counter flow and cross flow.

9. The use method of the absorption slurry according to claim 7, wherein the reaction temperature of the absorbent prepared by water and ferric chloride is from 35 to 110°C, and is from 35°C to 130°C prepared by hydrochloric acid and/or salt solution instead of water.

10. The absorption slurry according to claim 1, wherein the regeneration of the absorbent can be implemented by heating or humidifying, or dissolving in water or hydrochloric acid solution to release the absorbed nitric oxide gas from the absorbent, and then followed by dehydration and chlorination process, where the desorption of nitric oxide gas from the absorbent, dehydration and chlorination can be performed simultaneously, and the temperature of said heating is greater or equal to 65 °C .

11. The regeneration method of the absorption slurry according to claim 10, wherein the dehydration and chlorination are carried out in the presence of hydrogen chloride gas.

12. The regeneration method of the absorption slurry according to claim 10, wherein the dehydration and chlorination can be carried out by adding sulfoxide chloride solution.
